# EUROPÄISCHE PATENTSCHRIFT

(11) **EP 1 843 935 B1**
(45) Veröffentlichungstag und Bekanntmachung des Hinweises auf die Patenterteilung: **26.08.2009**
(21) Anmeldenummer: 06706251.3
(22) Anmeldetag: 17.01.2006
(51) Int. Cl.: B62D 33/07, B62D 33/06, B60R 21/00

(54) **FAHRERHAUS EINES KRAFTFAHRZEUGS**
DRIVER CABIN ON A MOTOR VEHICLE
CABINE D'UN VEHICULE

(30) Priorität: 01.02.2005 DE 102005004449
(43) Veröffentlichungstag der Anmeldung: 17.10.2007
(73) Patentinhaber: Daimler AG, 70327 Stuttgart (DE)
(72) Erfinder: HAMESTER, Jens, 71397 Leutenbach (DE); KOKES, Michael, 69198 Schriesheim (DE); LUDWIG, Ralf, 70567 Stuttgart (DE)
(74) Vertreter: JENSEN & SON
(86) Internationale Anmeldenummer: PCT/EP2006/000343
(87) Internationale Veröffentlichungsnummer: WO 2006/081937

(56) Entgegenhaltungen:
- EP-A- 0 147 712
- US-A- 4 506 751
- US-A1- 2002 144 849
- PATENT ABSTRACTS OF JAPAN Bd. 1996, Nr. 12, 26. Dezember 1996 (1996-12-26) -& JP 08 216936 A (HINO MOTORS LTD), 27. August 1996 (1996-08-27)

## Beschreibung

Die Erfindung betrifft ein Kraftfahrzeug, insbesondere ein Nutzkraftfahrzeug, mit einer Tragstruktur, an der ein Fahrerhaus federnd und/oder schwingend gelagert ist, gemäß Oberbegriff des Anspruchs 1.

Aus DE 28 06 247 C2 ist ein Luftfedersystem für Fahrerhäuser von Nutzfahrzeugen bekannt, das Stabilisierungseinrichtungen aufweist.

Aus DE 27 08 477 A1 ist ein Federsystem für das Fahrerhaus eines Nutzfahrzeugs mit einem Koppelfederelement bekannt.

Aus DE 101 33 969 A1 ist eine Lageranordnung für ein Fahrerhaus eines Lastkraftwagens unter Verwendung von elastischen Lagern bekannt, die um den Schwerpunkt des Fahrerhauses herum angeordnet sind.

Aus DE 102 05 263 A1 ist eine Fahrerhauslagerung für ein Haubenfahrzeug bekannt, die einen Fahrzeugrahmen umfasst, der über mindestens drei Federn ein Fahrerhaus trägt, wobei ein quer zum Fahrzeugrahmen angeordneter Stabilisator, der einer Wankbewegung des Fahrerhauses entgegenwirkt, im hinteren Endbereich des Fahrerhauses verläuft.

Aus DE 102 32 909 A1 ist eine Kabinenlagerung zur schwingungsgedämpffen und/oder zur verstellbaren Abstützung einer Fahrzeugkabine auf einem Fahrzeugchassis mit mehreren als Federdämpfungselemente und/oder Verstellelemente ausgebildeten, in ihrer Länge veränderlichen Verbindungselementen bekannt. Die Verbindungselemente sind derart angeordnet, dass eine aktive und/oder passive Federdämpfung der Fahrzeugkabine in sechs Freiheitsgraden möglich ist.

Die gattungsgemäße EP 0 147 712 A1 betrifft ein Nutzfahrzeug mit einem mittels einer hydraulischen Schwenkeinrichtung kippbarem Fahrerhaus, wobei die hydraulische Schwenkeinrichtung ein federbetätigtes Umschaltventil umfasst, durch welches das Nutzfahrzeug hydraulisch in seiner Fahrstellung gesichert ist.

Aufgabe der Erfindung ist es, ein Kraftfahrzeug, insbesondere ein Nutzkraftfahrzeug, mit einer Tragstruktur, an der ein Fahrerhaus federnd und/oder schwingend gelagert ist, zu schaffen, durch das die Sicherheit im Fall eines Unfalls erhöht werden kann.

Die Aufgabe ist bei einem Kraftfahrzeug, insbesondere einem Nutzkraftfahrzeug, mit einer Tragstruktur, an der ein Fahrerhaus federnd und/oder schwingend gelagert ist, dadurch gelöst, dass die Verriegelungseinrichtung in einem kritischen Zustand des Kraftfahrzeugs beziehungsweise bei einem tatsächlichen Unfall so geschlossen ist beziehungsweise wird, dass das Fahrerhaus relativ starr oder starr mit der Tragstruktur verbunden ist beziehungsweise wird. Im geschlossenen Zustand der Verriegelungseinrichtung wird die federnde und/oder schwingende Lagerung des Fahrerhauses zumindest teilweise blockiert, so dass wenigstens ein Teil der auf das Fahrerhaus wirkenden Kräfte in die Tragstruktur umgelenkt wird.

Bereits vorhandene Verbindungen zwischen Fahrerhaus und Tragstruktur reichen unter Umständen nicht aus, um ein unerwünschtes Lösen des Fahrerhauses von der Tragstruktur zu verhindern, wenn große Kräfte auf das Fahrerhaus einwirken. Durch die zusätzliche Verriegelungseinrichtung wird ein unerwünschtes Lösen des Fahrerhauses von der Tragstruktur sicher verhindert.

Im Normalzustand des Kraftfahrzeugs ist die Verriegelungseinrichtung dagegen so geöffnet, dass das Fahrerhaus federnd und/oder schwingend gelagert ist. Die Verriegelungseinrichtung bleibt im geöffneten Zustand, solange von einem in das Fahrzeug integrierten Überwachungssystem kein kritischer Fahrzustand erkannt wird beziehungsweise kein tatsächlicher Unfall erkannt wird. Ein kritischer Fahrzustand tritt zum Beispiel im Fall eines Zusammenstoßes mit einem anderen Fahrzeug auf. Im geöffneten Zustand der Verriegelungseinrichtung wird die federnde und/oder schwingende Lagerung des Fahrerhauses nicht beeinträchtigt. In diesem Zustand ist eine gewisse Bewegung des Fahrerhauses relativ zu der Tragstruktur möglich.

Ein bevorzugtes Ausführungsbeispiel des Kraftfahrzeugs ist dadurch gekennzeichnet, dass die Verriegelungseinrichtung mit einer Erkennungseinrichtung zusammenwirkt, die einen gefährlichen oder kritischen Zustand des Kraftfahrzeugs erkennt. Die Erkennungseinrichtung dient dazu, den Zustand des Kraftfahrzeugs im Betrieb zu überwachen. Ein kritischer Zustand des Kraftfahrzeugs kann zum Beispiel durch Überwachung wenigstens einer Auswahl der Parameter Lenkwinkel, Abstand zu einem Objekt, Relativgeschwindigkeit, Fahrzeugverzögerung, -geschwindigkeit, -beschleunigung, Eigengeschwindigkeit, starke Richtungswechsel, Querbeschleunigung, Raddrehzahl und/oder Neigungswinkel erkannt werden. Es ist aber auch denkbar, dass die Verriegelungseinrichtung mit einer Erkennungseinrichtung zusammenwirkt, die einen tatsächlichen Unfall erkennt, wie beispielsweise Crashsensoren.

Ein weiteres bevorzugtes Ausführungsbeispiel des Kraftfahrzeugs ist dadurch gekennzeichnet, dass das Fahrerhaus schwenkbar an der Tragstruktur gelagert ist. Die schwenkbare Lagerung des Fahrerhauses ermöglicht den Zugang zu einer zumindest teilweise unterhalb des Fahrerhauses angeordneten Antriebseinheit. Die schwenkbare Lagerung ist vorzugsweise so ausgelegt und gestaltet, dass die federnde und/oder schwingende Lagerung des Fahrerhauses an der Tragstruktur erhalten bleibt. Wenn, zum Beispiel im Fall eines Unfalls, große Kräfte auf das Fahrerhaus einwirken, kann es passieren, dass die Verbindung zwischen Fahrerhaus und Tragstruktur im Bereich der schwenkbaren Lagerung zerstört beziehungsweise durchtrennt wird und sich das Fahrerhaus von der Tragstruktur löst. Durch die erfindungsgemäße Verriegelungseinrichtung wird gewährleistet, dass das Fahrerhaus auch im Fall eines schweren Unfalls fest mit der Tragstruktur verbunden bleibt.

Ein weiteres bevorzugtes Ausführungsbeispiel des Kraftfahrzeugs ist dadurch gekennzeichnet, dass die Verriegelungseinrichtung mindestens zwei Greifelemente umfasst, die schwenkbar an der Tragstruktur gelagert sind. Es ist auch möglich, die Greifelemente schwenkbar an dem Fahrerhaus zu lagern.

Ein weiteres bevorzugtes Ausführungsbeispiel des Kraftfahrzeugs ist dadurch gekennzeichnet, dass die Greifelemente zwischen einer Ruhestellung und einer Verriegelungsstellung schwenkbar sind, in der die Greifelemente jeweils ein Widerlager zumindest teilweise umgreifen, das an dem Fahrerhaus befestigt ist. Die Greifelemente sind vorzugsweise hakenförmig ausgebildet und schaffen in der Verriegelungsstellung eine starre Verbindung zwischen dem Fahrerhaus und der Tragstruktur.

Ein weiteres bevorzugtes Ausführungsbeispiel des Kraftfahrzeugs ist dadurch gekennzeichnet, dass die Greifelemente in der Verriegelungsstellung so angeordnet und ausgebildet sind, dass eine Bewegung des Fahrerhauses in vertikaler Richtung nach oben verhindert wird. Vorzugsweise liegen zur federnden und/oder schwingenden Lagerung des Fahrerhauses verwendete Federelemente auf Block, wenn die Greifelemente ihre Verriegelungsstellung eingenommen haben.

Ein weiteres bevorzugtes Ausführungsbeispiel des Kraftfahrzeugs ist dadurch gekennzeichnet, dass ein Widerlager im Bereich des vorderen, unteren Endes des Fahrerhauses angeordnet ist. Dadurch wird in diesem Bereich ein Lösen des Fahrerhauses von der Tragstruktur sicher verhindert.

Ein weiteres bevorzugtes Ausführungsbeispiel des Kraftfahrzeugs ist dadurch gekennzeichnet, dass ein Widerlager im Bereich des hinteren, unteren Endes des Fahrerhauses angeordnet ist. Dadurch wird in diesem Bereich ein Lösen des Fahrerhauses von der Tragstruktur sicher verhindert.

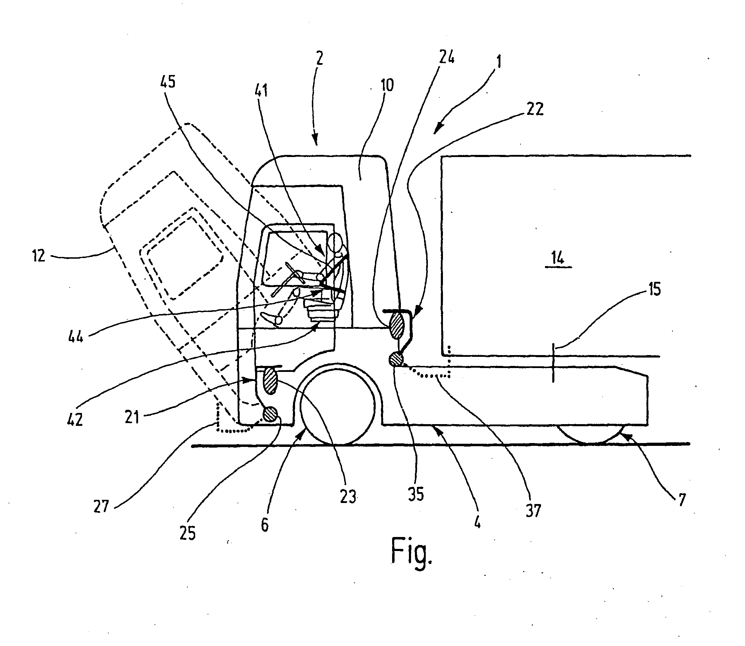

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein.

In der beiliegenden Figur ist der vordere Teil eines Sattelzuges schematisch dargestellt.
Die beiliegende Figur zeigt das vordere Ende eines Sattelzugs 1. Der Sattelzug 1 umfasst eine Zugmaschine 2 mit einer Tragstruktur 4. An der Tragstruktur 4 sind in bekannter Art und Weise zwei Achsen mit Rädern 6, 7 angebracht. Außerdem ist an der Tragstruktur 4 ein Fahrerhaus 10 federnd und/oder schwingend gelagert. Darüber hinaus ist das Fahrerhaus 10 schwenkbar an der Tragstruktur 4 angebracht, um den Zugang zu einer unterhalb des Fahrerhauses 10 angeordneten Antriebseinheit zu ermöglichen. Durch gestrichelte Linien 12 ist die ausgeschwenkte Stellung des Fahrerhauses 10 angedeutet. An das hintere Ende der Zugmaschine 2 ist in bekannter Art und Weise ein Auflieger 14 angekuppelt, wie durch einen Strich 15 angedeutet ist.

In der Nähe des vorderen, unteren Endes des Fahrerhauses 10 ist an der Tragstruktur 4 ein Greifarm 21 schwenkbar gelagert. Der Greifarm 21 ist im Wesentlichen hakenförmig ausgebildet. Ein ähnlicher Greifarm 22 ist in der Nähe des hinteren, unteren Endes des Fahrerhauses 10 schwenkbar an der Tragstruktur 4 angebracht. Der Greifarm 21 weist ein rechtwinklig abgewinkeltes Ende auf, das an einem Nocken 23 angreift, der im Bereich des vorderen, unteren Endes des Fahrerhauses 10 an dem Fahrerhaus 10 befestigt ist. In gleicher Weise greift der Greifarm 22 an einem Nocken 24 an, der im Bereich des hinteren, unteren Endes des Fahrerhauses 10 an dem Fahrerhaus befestigt ist.

Die Greifarme 21, 22 schaffen in der dargestellten Verriegelungsstellung eine starre Verbindung zwischen der Tragstruktur 4 und dem Fahrerhaus 10. Aus ihrer Verriegelungsstellung sind die Greifarme 21, 22 um eine Drehachse 25, 35 jeweils in eine Ruhestellung 27, 37 schwenkbar, die in der Figur gestrichelt angedeutet ist. In der Ruhestellung der Greifarme 21, 22 ist das Fahrerhaus 10 relativ zu der Tragstruktur 4 bewegbar, um eine federnde und/oder schwingende Lagerung des Fahrerhauses 10 an der Tragstruktur 4 zu ermöglichen. In der Verriegelungsstellung der Greifarme 21, 22 ist das Fahrerhaus 10 starr mit der Tragstruktur 4 verbunden. In der Verriegelungsstellung der Greifarme 21, 22 ist die federnde und/oder schwingende Lagerung des Fahrerhauses an der Tragstruktur 4 blockiert.

Im Inneren des Fahrerhauses 10 sitzt ein Fahrer 41 auf einem Sitz 42. Der Fahrer 41 wird in bekannter Art und Weise durch ein Sicherheitsgurtsystem 44 mit einem Sicherheitsgurt 45 auf dem Sitz 42 gehalten.

Die Greifarme 21, 22 und die Nocken 23, 24 bilden eine Verriegelungseinrichtung, die aus ihrer Ruhestellung 27, 37 in ihre Verriegelungsstellung bewegt wird, wenn der Sattelzug 1 in einen kritischen Zustand gelangt oder wenn ein tatsächlicher Unfall eintritt. Zu diesem Zweck ist in dem Sattelzug 1 eine Sicherungseinrichtung integriert, die einen kritischen Zustand, wie zum Beispiel einen bevorstehenden oder tatsächlichen Crash, rechtzeitig erkennt. Die Verriegelungseinrichtung wird auch als Verblockungsmechanismus bezeichnet, der das Fahrerhaus 10 im schwingenden Zustand verblocken kann. Dadurch kann ein Teil der in einer kritischen Situation auf das Fahrerhaus 10 wirkenden Kräfte in die Tragstruktur 4 umgelenkt werden.

Zusätzlich zu der Fahrerhaussicherung wird vor einem Zusammenstoß auch der Fahrer 41 und gegebenenfalls ein Beifahrer auf die bevorstehenden Aufprallbeschleunigungen vorbereitet. Zu diesem Zweck wird der Sicherheitsgurt 45 des Sicherheitsgurtsystems 44 entsprechend der erkannten Unfallstärke vorgespannt. Durch die erfindungsgemäße Verriegelungseinrichtung wird gewährleistet, dass das Fahrerhaus 10 auch bei sehr starken Zusammenstößen starr mit der Tragstruktur 4 verbunden bleibt. Der Fahrer und gegebenenfalls der Beifahrer können auf die Aufprallbeschleunigungen vorbereitet werden. Dadurch können Verletzungen von Fahrer und Beifahrer verringert oder verhindert werden. Außerdem werden andere Verkehrsteilnehmer weniger stark geschädigt.

Die Verriegelungseinrichtung dient dazu, das Fahrerhaus 10 bei Kollisionsgefahr zu stabilisieren. Eine Kollisionsgefahr kann anhand der Reaktionen des Fahrers erkannt werden, zum Beispiel beim Anfordern einer Notbremsung oder bei hektischen Lenkeinschlägen. Eine Kollisionsgefahr kann auch anhand des Fahrzeugverhaltens erkannt werden, zum Beispiel bei einer kritischen Querdynamik bei Unter- oder Übersteuern des Fahrzeugs. Eine Kollisionsgefahr kann auch mit Hilfe von Signalen einer Umfeldsensorik erkannt werden, zum Beispiel einer Radarsensorik, mit der der Relativabstand und die Relativgeschwindigkeit des Fahrzeugs und gegebenenfalls in der Nähe des Fahrzeugs befindliche Objekte erkannt werden können. Wenn die Sicherheitseinrichtung erst bei einem tatsächlichen Unfall aktiviert werden soll, so kann sie beispielsweise mit Crashsensoren gekoppelt werden.

Wenn die Sicherheitseinrichtung eine kritische Situation, zum Beispiel eine Notbremsung, die durch den Fahrer selbst oder auch mit Hilfe eines Bremsassistenten oder einer automatischen Bremsung ausgelöst wird, oder einen tatsächlichen Unfall erkennt, dann werden die Greifarme 21, 22 aus ihrer Ruhestellung in ihre Verriegelungsstellung bewegt. Außerdem wird ein reversibler Gurtstraffer aktiviert.

## Patentansprüche

1. Kraftfahrzeug, insbesondere Nutzkraftfahrzeug, mit einer Tragstruktur (4), an der ein Fahrerhaus (10) federnd und/oder schwingend gelagert ist, wobei das Kraftfahrzeug eine Verriegelungseinrichtung (21-24) umfasst, durch die das Fahrerhaus (10) relativ starr mit der Tragstruktur (4) verbindbar ist,
**dadurch gekennzeichnet,**
**dass** die Verriegelungseinrichtung (21-24) im Normalzustand des Kraftfahrzeugs so geöffnet ist, dass das Fahrerhaus (10) federnd und/oder schwingend gelagert ist, und in einem kritischen Zustand des Kraftfahrzeugs so geschlossen ist, dass das Fahrerhaus (10) relativ starr mit der Tragstruktur (4) verbunden ist.

2. Kraftfahrzeug nach Anspruch 1,
**dadurch gekennzeichnet,**
**dass** die Verriegelungseinrichtung (21-24) mit einer Erkennungseinrichtung zusammenwirkt, die einen gefährlichen oder kritischen Zustand des Kraftfahrzeugs erkennt.

3. Kraftfahrzeug nach einem der vorhergehenden Ansprüche,
**dadurch gekennzeichnet,**
**dass** das Fahrerhaus (10) schwenkbar an der Tragstruktur (4) gelagert ist.

4. Kraftfahrzeug nach einem der vorhergehenden Ansprüche,
**dadurch gekennzeichnet,**
**dass** die Verriegelungseinrichtung mindestens zwei Greifelemente (21,22) umfasst, die schwenkbar an der Tragstruktur (4) gelagert sind.

5. Kraftfahrzeug nach Anspruch 4,
**dadurch gekennzeichnet,**
**dass** die Greifelemente (21,22) zwischen einer Ruhestellung und einer Verriegelungsstellung schwenkbar sind, in der die Greifelemente (21,22) jeweils ein Widerlager (23,24) zumindest teilweise umgreifen, das an dem Fahrerhaus (10) befestigt ist.

6. Kraftfahrzeug nach Anspruch 5,
**dadurch gekennzeichnet,**
**dass** die Greifelemente (21,22) in der Verriegelungsstellung so angeordnet und ausgebildet sind, dass eine Bewegung des Fahrerhauses (10) in vertikaler Richtung nach oben verhindert wird.

7. Kraftfahrzeug nach Anspruch 5 oder 6,
**dadurch gekennzeichnet,**
**dass** ein Widerlager (23) im Bereich des vorderen, unteren Endes des Fahrerhauses (10) angeordnet ist.

8. Kraftfahrzeug nach einem der Ansprüche 5 bis 7,
**dadurch gekennzeichnet,**
**dass** ein Widerlager (24) im Bereich des hinteren, unteren Endes des Fahrerhauses (10) angeordnet ist.

## Claims

1. Motor vehicle, in particular commercial vehicle, with a support structure (4) on which a driver's cab is resiliently and/or swingably mounted,
wherein the motor vehicle includes a locking device (21-24) whereby the driver's cab (10) can be joined to the support structure (4) in a relatively rigid manner,
**characterised in that** the locking device (21-24) is opened in the normal condition of the motor vehicle such that the driver's cab is resiliently and/or swingably mounted and closed in a critical condition of the motor vehicle such that the driver's cab (10) is joined to the support structure (4) in a relatively rigid manner.

2. Motor vehicle according to claim 1,
**characterised in that**
the locking device (21-24) acts together with a detection device which detects a dangerous or critical condition of the motor vehicle.

3. Motor vehicle according to any of the preceding claims,
**characterised in that**
the driver's cab (10) is pivotably mounted on the support structure (4).

4. Motor vehicle according to any of the preceding claims,
**characterised in that**
the locking device includes at least two gripping elements (21, 22) which are pivotably mounted on the support structure (4)

5. Motor vehicle according to claim 4,
**characterised in that**
the gripping elements (21, 22) are pivotable between an inactive position and a locking position in which each gripping element (21, 22) at least partially encompasses an abutment (23, 24) attached to the driver's cab (10).

6. Motor vehicle according to claim 5,
**characterised in that**
the gripping elements (21, 22) are in the locking position arranged and designed such that a vertical upward movement of the driver's cab (10) is prevented.

7. Motor vehicle according to claim 5 or 6,
**characterised in that**
one abutment (23) is located in the region of the front lower end of the driver's cab (10).

8. Motor vehicle according to any of claims 5 to 7,
**characterised in that**
one abutment (24) is located in the region of the rear lower end of the driver's cab (10).

## Revendications

1. Véhicule, en particulier, véhicule utilitaire, avec une structure porteuse (4) sur laquelle une cabine (10) de véhicule est logée de façon suspendue et / ou oscillante, le véhicule comprenant un dispositif (21-24) de verrouillage qui permet de connecter la cabine (10) de véhicule à la structure porteuse (4) de façon relativement rigide **caractérisé en ce que** le dispositif de verrouillage (21-24) en état normal du véhicule est ouvert de manière telle que la cabine (10) de véhicule soit logée de façon suspendue et / ou oscillante, et dans un état critique du véhicule est fermé de manière telle que la cabine (10) de véhicule soit connectée à la structure porteuse (4) de façon relativement rigide.

2. Véhicule selon la revendication 1, **caractérisé en ce que** le dispositif de verrouillage (21-24) coopère avec un dispositif de détection qui détecte un état dangereux ou critique du véhicule.

3. Véhicule selon l'une quelconque des revendications précédentes, **caractérisé en ce que** la cabine (10) de véhicule est logée sur la structure porteuse (4) de manière pivotante.

4. Véhicule selon l'une quelconque des revendications précédentes, **caractérisé en ce que** le dispositif de verrouillage comprend au moins deux éléments de préhension (21, 22) qui sont logés sur la structure porteuse (4) de manière pivotante.

5. Véhicule selon la revendication 4, **caractérisé en ce que** les éléments de préhension (21, 22) peuvent pivoter entre une position de repos et une position de verrouillage, dans laquelle les éléments de préhension (21, 22) entourent respectivement au moins en partie un contre-appui (23, 24) qui est fixé à la cabine (10) de véhicule.

6. Véhicule selon la revendication 5, **caractérisé en ce que** les éléments de préhension (21, 22) sont configurés et disposés dans la position de verrouillage de manière telle qu'ils empêchent un mouvement de la cabine (10) de véhicule vers le haut dans le sens vertical.

7. Véhicule selon la revendication 5 ou 6, **caractérisé en ce qu'**un contre-appui (23) est disposé dans la zone de l'extrémité avant inférieure de la cabine (10) de véhicule.

8. Véhicule selon l'une des revendications 5 à 7, **caractérisé en ce qu'**un contre-appui (24) est disposé dans la zone de l'extrémité arrière inférieure de la cabine (10) de véhicule.
